# EUROPÄISCHE PATENTANMELDUNG

(11) **EP 1 439 196 A1**
(43) Veröffentlichungstag der Anmeldung: **21.07.2004**
(21) Anmeldenummer: 03027129.0
(22) Anmeldetag: 26.11.2003
(51) Int. Cl.: C08F 2/22, B01F 13/00

(54) **Verfahren und Vorrichtung zur Herstellung von Emulsionspolymerisaten**

(30) Priorität: 17.01.2003 DE 10301874
(71) Anmelder: Celanese Emulsions GmbH, 61476 Kronberg/Ts. (DE)
(72) Erfinder: Cabrera, Ivan, Dr., 63303 Dreieich (DE)
(74) Vertreter: Ackermann, Joachim, Dr.

(57) **Zusammenfassung**

Die vorliegende Erfindung betrifft ein Verfahren zur Herstellung von Emulsionspolymerisaten, wobei mindestens eine Monomerzusammensetzung in einen Reaktor gegeben und in einem Zweiphasensystem polymerisiert wird, dadurch gekennzeichnet, dass man mindestens eine Monomerzusammensetzung und mindestens eine Initiatorzusammensetzung über unterschiedliche Zuführungen in einen Mikromischer führt und mischt, wobei man die Initiatorzusammensetzung vor dem Eintritt in den Mikromischer auf eine Temperatur vorwärmt, bei der mindestens einer der Initiatoren Radikale bildet, und man nach dem Austritt der in dem Mikromischer gebildeten Mischung mindestens einen Teil der Monomeren polymerisiert.

## Beschreibung

Die vorliegende Erfindung betrifft ein Verfahren und eine Vorrichtung zur Herstellung von Emulsionspolymerisaten.

Die Herstellung von Emulsionspolymerisaten ist seit langem bekannt. Bei der Emulsionspolymerisation handelt es sich um ein zwei phasiges System, wobei Verbindungen, beispielsweise die Monomere sowie die hieraus gebildeten Polymere üblicherweise in Wasser dispergiert vorliegen. Eine Übersicht über die Emulsionspolymerisation wird beispielsweise in "Reactions And Synthesis in Surfactant Systems (Ed. John Texter), M. Dekker Surfactant Science Series, Vol. 100, 2001, Emulsion Polymerisation von K. Tauer" dargelegt.

Zur Herstellung von Emulsionspolymerisaten werden in industriellem Maßstab üblich Batch- bzw. Semibatchtechnologie eingesetzt. Diese Verfahren haben die üblichen Nachteile dieser Verfahrensart. So müssen zwangsweise sehr große Reaktoren verwendet werden. Des weiteren ist die Regelung relativ aufwendig, wobei auftretende Probleme schwierig zu lösen sind, da ein Eingriff erst nach dem Start der Reaktion möglich ist. Dementsprechend ist die Gewährleistung einer gleichbleibenden Produktqualität nur sehr schwer möglich, so dass recht hohe Toleranzen in Kauf genommen werden müssen.

In Bezug auf die Lösungspolymerisation ist solch eine kontinuierliche Herstellung von Polymeren mittels Mikromischer aus der DE 198 16 886 A1 bekannt. In dieser Anmeldeschrift wird als Problem beschrieben, dass ein Teil der durch Lösungspolymerisation hergestellten Polymere bei hohen Molekulargewichten im Lösungsmittel unlöslich werden können. Dieser hochmolekulare Anteil kann unter anderem durch eine anfängliche schlechte Durchmischung von Monomeren und Initiator entstehen, hierdurch können unerwünschte Beläge im Reaktorsystem entstehen. Als Lösung wird in DE 198 16 886 A1 vorgeschlagen, dass sowohl die Monomerenlösung als auch die Initiatorlösung auf die Reaktionstemperatur vorgeheizt werden. Hierdurch kann die Bildung von hochmolekularen Anteilen innerhalb des Mikroreaktors erfolgreich vermieden werden. Hochmolekular bedeutet gemäß DE 198 16 886 A1, dass das Molekulargewicht > 10⁵ g/mol ist. Die Herstellung größerer Molmassen ist mit Verfahren der Lösungspolymerisation mit hohem Aufwand verbunden, da die Viskosität mit zunehmender Molmasse sehr stark zunimmt, so dass die Systeme schon bei geringer Polymerkonzentration eine sehr hohe kinematische Viskosität aufweisen.

Im Gegensatz zur Lösungspolymerisation werden mit der Emulsionspolymerisation Polymere mit sehr hohen Molekulargewichten, beispielsweise > 10⁷ hergestellt. Diese hohen Molekulargewichte werden dadurch möglich, dass die Viskosität der Emulsion unabhängig von der Molmasse der Polymeren ist. Im Vergleich zu anderen Polymerisationsverfahren, beispielsweise der Lösungspolymerisation, neigen die heterogenen Systeme, die bei der Emulsionspolymerisation eingesetzt werden, bei Störung des Gleichgewichts zu verstärkter Belagsbildung, die bei der bekannten Batch- bzw. Semibatchtechnologie beobachtet werden kann.

Darüber hinaus werden die mittels Lösungspolymerisation erhaltenen Polymere im allgemeinen vom Lösungsmittel getrennt, wobei Restmonomere abgetrennt werden können. Im Gegensatz hierzu werden die durch Emulsionspolymerisation erhaltenen Zusammensetzungen aus Kostengründen im allgemeinen ohne weitere Reinigung eingesetzt. Einige der zur Herstellung der Emulsionspolymerisaten eingesetzten Monomere sind jedoch gesundheitsschädlich, wobei häufig recht strenge Grenzwerte gelten. Dementsprechend sollten die erhaltenen Emulsionen einen möglichst geringen Anteil an Restmonomeren aufweisen, ohne dass spezielle Reinigungsverfahren eingesetzt werden müßten.

Dementsprechend sind die Probleme von Lösungs- und Emulsionspolymerisation nicht vergleichbar, da die heterogenen Emulsionspolymerisationssysteme viel eher zur Belagsbildung neigen.

In Anbetracht des hierin angegebenen und diskutierten Standes der Technik war es mithin Aufgabe der vorliegenden Erfindung Verfahren zur Herstellung von Emulsionspolymerisaten anzugeben, die kontinuierlich durchgeführt werden können. Hierbei sollten die hergestellten Emulsionspolymerisate eine besonders gleichbleibende, konstante Produktqualität aufweisen.

Eine weitere Aufgabe der Erfindung bestand darin, ein Emulsionspolymerisationsverfahren anzugeben, das auf einfache Weise in großem Maßstab durchgeführt werden kann.

Des weiteren lag der Erfindung die Aufgabe zugrunde, ein Verfahren zur Herstellung von Emulsionspolymerisaten bereitzustellen, das einfach in der Handhabung und Regelung ist.

Des weiteren war es mithin Aufgabe der vorliegenden Erfindung ein Verfahren zur Verfügung zu stellen, das besonders kostengünstig durchgeführt werden kann, wobei auf allzu aufwändige Regelungen und Kontrollen, die das übliche Maß übersteigen im allgemeinen verzichtet werden kann.

Darüber hinaus war es eine weitere Aufgabe eine Vorrichtung zur Durchführung eines derartigen Emulsionsverfahrens zur Verfügung zu stellen.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Verfahren zur Herstellung von Emulsionspolymerisaten. Zweckmäßige Abwandlungen des erfindungsgemäßen Verfahrens werden in den auf Anspruch 1 rückbezogenen Unteransprüchen unter Schutz gestellt.

Hinsichtlich der Vorrichtung zur Durchführung des erfindungsgemäßen Verfahrens liefert Anspruch 15 eine Lösung der zugrundeliegenden Aufgabe.

Dadurch, dass man mindestens eine Monomerzusammensetzung und mindestens eine Initiatorzusammensetzung über unterschiedliche Zuführungen in einen Mikromischer führt und mischt, wobei man die Initiatorzusammensetzung vor dem Eintritt in den Mikromischer auf eine Temperatur vorgewärmt, bei der mindestens einer der Initiatoren Radikale bildet, und man nach dem Austritt der in dem Mikromischer gebildeten Mischung mindestens einen Teil der Monomeren polymerisiert, gelingt es Verfahren zur Herstellung von Emulsionspolymerisaten, wobei mindestens eine Monomerzusammensetzung in einen Reaktor gegeben und in einem Zweiphasensystem polymerisiert wird, zur Verfügung zu stellen, die kontinuierlich durchgeführt werden können.

Durch die erfindungsgemäßen Maßnahmen werden u.a. insbesondere folgende Vorteile erzielt:
⇒ Das Verfahren ermöglicht die Herstellung von Emulsionspolymerisate mit einer besonders gleichbleibenden, konstanten Produktqualität.
⇒ Des weiteren kann das Emulsionspolymerisationsverfahren auf einfache Weise in großem Maßstab durchgeführt werden.
⇒ Darüber hinaus ist das Verfahren zur Herstellung von Emulsionspolymerisaten einfach in der Handhabung.
⇒ Weiterhin kann das Verfahren der vorliegenden Erfindung besonders kostengünstig durchgeführt werden, wobei auf allzu aufwändige Regelungen und Kontrollen, die das übliche Maß übersteigen im allgemeinen verzichtet werden kann.
⇒ Des weiteren liefert das Verfahren der vorliegenden Erfindung Polymerdispersionen mit einem besonders niedrigen Gehalt an Restmonomeren.

Im Verfahren der vorliegenden Erfindung werden Monomere in einem Zweiphasensystem polymerisiert. Im allgemeinen umfasst eine dieser Phasen Wasser und die andere Phase eine in Wasser schlecht lösliche organische Verbindung. Im allgemeinen weist die kontinuierliche Phase Wasser auf, wohingegen die organische Phase in dieser wässrigen Phase dispergiert vorliegt. Andererseits sind auch inverse Systeme bekannt, mit denen eine Emulsionspolymerisation durchgeführt werden kann (vgl. Ullmann's Encyclopedia of Industrial Chemistry, 5. Auflage auf CDROM Stichwort Emulsionspolymerisation).

Derartige Systeme sind in der Fachwelt weit bekannt und beispielsweise in Encyclopedia of Polymer Science and Engineering, Vol. 8, S. 659ff (1987); D.C. Blackley, in High Polymer Latices, Vol. 1, S. 35ff (1966); H. Warson, The Applications of Synthetic Resin Emulsions, Seite 246ff, Kapitel 5 (1972); D. Diederich, Chemie in unserer Zeit 24, S. 135 bis 142 (1990); Emulsion Polymerization, Interscience Publishers, New York (1965); DE-A 40 03 422 und Dispersionen synthetischer Hochpolymerer, F. Hölscher, SpringerVerlag, Berlin (1969) beschrieben. Vorzugsweise werden Emulsionspolymerisationen in wässriger Phase durchgeführt, um wässrige Polymerisatdispersionen zu erhalten.

Wässrige Polymerisatdispersionen sind fluide Systeme, die als disperse Phase in wässrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 50 µm, häufig hauptsächlich im Bereich von 0,06 bis 20 µm. Die Stabilität der dispersen Verteilung erstreckt sich oft über einen Zeitraum von mindestens 2 Monaten, vielfach sogar über einen Zeitraum von mindestens 4 und besonders bevorzugt mindestens 6 Monaten. Ihr Polymerisatvolumenanteil beträgt, bezogen auf das Gesamtvolumen der wässrigen Polymerisatdispersion, normalerweise 10 bis 70 Vol.-%. Ebenso wie Polymerisatlösungen beim Verdampfen des Lösungsmittels, weisen wässrige Polymerisatdispersionen beim Verdampfen des wässrgen Dispergiermediums die Eigenschaft auf, Polymerisatfilme zu bilden, weshalb wässrige Polymerisatdispersionen in vielfacher Weise als Bindemittel, z.B. für Anstrichfarben oder für Massen zum Beschichten von Leder, Anwendung finden.

Beim erfindungsgemäßen Verfahren wird eine Monomerzusammensetzung über eine Zuführung in den Mikromischer geleitet. Die Monomerzusammensetzung umfasst mindestens eine polymerisierbare Verbindung, die im folgenden als Monomere bezeichnet werden.

Die zur Emulsionspolymerisation einsetzbaren Monomere sind in der Fachwelt bekannt. Vorzugsweise werden radikalisch polymerisierbare Monomere eingesetzt.

Zu diesen Monomeren gehören unter anderem Alkene, beispielsweise Ethylen, Propylen, Butylen; Vinylhalogenide, wie beispielsweise Vinylchlorid, Vinylfluorid, Vinylidenchlorid und Vinylidenfluorid; Vinylester, wie Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis 10 Kohlenstoffatomen im Säurerest, Vinylester von längerkettigen gesättigten oder ungesättigten Fettsäuren wie beispielsweise Vinyllaurat, Vinylstearat sowie Vinylester der Benzoesäure und substituierter Derivate der Benzoesäure, wie Vinyl-p-tert.-butylbenzoat; Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; Diene und mehrfach ethylenisch ungesättigte Kohlenwasserstoffe, wie beispielsweise Divinylbenzol, Butadien, Isopren, Diallylphthalat, Diallylmaleinat, Triallylcyanurat, Tetraallyloxyethan, Butandiol-1,4-dimethacrylat, Triethylenglykoldimethacrylat, Divinyladipat, Allyl-(meth)-acrylat, Vinylcrotonat, Methylenbisacrylamid, Hexandioldiacrylat, Pentaerythroldiacrylat und Trimethylolpropantriacrylat; Monomere mit N-funktionellen Gruppen, insbesondere(Meth)acrylamid, Allylcarbamat, Acrylnitril, N-Methylol(meth)acrylamid, N-Methylolallylcarbamat sowie die N-Methylolester, -alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)acrylamid, N-Dimethylaminopropyl(meth)acrylamid, N-Methyl-(meth)acrylamid, N-Butyl(meth)acrylamid, N-Cyclohexyl(meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid, Ethylimidazolidonmethacrylat, N-Vinylformamid, N-Vinylpyrrolidon; Vinylverbindungen, die eine Acetophenon- und/oder Benzophenongruppe aufweisen, wobei bevorzugte Acetophenon- und/oder Benzophenonmonomere in EP-A-0 417 568 beschrieben sind; Vinylverbindungen mit einer Säuregruppe sowie deren wasserlösliche Salze, wie Vinylsulfonsäure, 1-Acrylamido-2-methylpropansulfonsäure und Vinylphosphonsäure sowie ethylenisch ungesättigte Mono- und Dicarbonsäuren, insbesondere Acrylsäure, Methacrylsäure, Maleinsäure, Fumarsäure und Itaconsäure; und (Meth)acrylate.

Der Ausdruck (Meth)acrylate umfasst Methacrylate und Acrylate sowie Mischungen aus beiden. Diese Monomere sind weithin bekannt. Zu diesen gehören unter anderem (Meth)acrylate, die sich von gesättigten Alkoholen ableiten, wie Methyl(meth)acrylat, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.; Amide und Nitrile der (Meth)acrylsäure, wie (Meth)acrylamid, N-Methylol(meth)acrylamid, N-(3-Dimethylaminopropyl)(meth)acrylamid, N-(Diethylphosphono)(meth)acrylamid, 1-Methacryloylamido-2-methyl-2-propanol, N-(3-Dibutylaminopropyl)(meth)acrylamid, N-t-Butyl-N-(diethylphosphono)(meth)acrylamid, N,N-bis(2-Diethylaminoethyl)(meth)acrylamid, 4-Methacryloylamido-4-methyl-2-pentanol, Acrylnitril, Methacryloylamidoacetonitril, N-(Methoxymethyl)(meth)acrylamid, N-(2-Hydroxyethyl)(meth)acrylamid, N-(Dimethylaminoethyl)(meth)acrylamid, N-Methyl-N-phenyl(meth)acrylamid, N,N-Diethyl(meth)acrylamid, N-Acetyl(meth)acrylamid, N-Methyl(meth)acrylamid, N,N-Dimethyl(meth)acrylamid, N-Isopropyl(meth)acrylamid; Aminoalkyl(meth)acrylate, wie tris(2-(Meth)acryloxyethyl)amin, N-Methylformamidoethyl(meth)acrylat, 3-Diethylaminopropyl(meth)acrylat, 4-Dipropylaminobutyl(meth)acrylat, 2-Ureidoethyl(meth)acrylat; andere stickstoffhaltige (Meth)acrylate, wie N-((Meth)acry)oy)oxyethyl)diisobutylketimin, 2-(Meth)acryloyloxyethylmethylcyanamid, Cyanomethyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; carbonylhaltige Methacrylate, wie 2-Carboxyethyl(meth)acrylat, N-(2-Methacryloyloxyethyl)-2-pyrrolidinon, N-(3-Methacryloyloxypropyl)-2-pyrrolidinon, Carboxymethyl(meth)acrylat, N-Methacryloylmorpholin, Oxazolidinylethyl(meth)acrylat, N-(Methacryloyloxy)-formamid, Acetonyl(meth)acrylat, N-Methacryloyl-2-pyrrolidinon; Cycloalkyl(meth)acrylate, wie 3-Vinylcyclohexyl(meth)acrylat, Bornyl(meth)acrylat; Hydroxyalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, Methacrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth)acrylat, 1-Ethoxybutyl(meth)acrylat, Methoxymethyl(meth)acrylat, 1-Ethoxyethyl(meth)acrylat, Ethoxymethyl(meth)acrylat; Methacrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-lodoethyl(meth)acrylat, Chloromethyl(meth)acrylat; Oxiranyl(meth)acrylate, wie 10,11-Epoxyundecyl(meth)acrylat, 2,3-Epoxycyclohexyl(meth)acrylat, 2,3-Epoxybutyl(meth)acrylat, 3,4-Epoxybutyl(meth)acrylat, Glycidyl(meth)acrylat; Phosphor-, Bor- und/oder Siliciumhaltige Methacrylate, wie 2-(Dibutylphosphono)ethyl(meth)acrylat, 2,3-Butylen(meth)acryloylethylborat, 2-(Dimethylphosphato)propyl(meth)acrylat, Methyldiethoxy(meth)acryloylethoxysilan, 2-(Ethylenphosphito)propyl(meth)acrylat, Dimethylphosphinomethyl(meth)acrylat, Dimethylphosphonoethyl(meth)acrylat, Diethyl(meth)acryloylphosphonat, Diethylphosphatoethyl(meth)acrylat, Dipropyl(meth)acryloylphosphat; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; Tri(meth)acrylate, wie Trimethylolpropantri(meth)acrylat; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2pyrrolidon.

Die zuvor dargelegten Monomere können einzeln oder als Mischung eingesetzt werden.

Im Fall von ausschließlich nach der Methode der radikalischen wässrigen Emulsionspolymerisation erzeugten wässrigen Polymerisatdispersionen werden die vorgenannten, eine erhöhte Wasserlöslichkeit aufweisenden, Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Neben den Monomeren kann die Monomerzusammensetzung weitere Bestandteile umfassen. Hierzu gehören unter anderem Wasser, Emulgatoren sowie Schutzkolloide. Vielfach wird die Monomerzusammensetzung in Form einer Emulsion in den Mikromischer gegeben.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420.

Gebräuchliche Emulgatoren sind z.B. ethoxylierte Mono-, Di- und Tri-Alkylphenole (EO-Grad: 3 bis 50, Alkylrest: C4 bis C9), ethoxylierte Fettalkohole (EO-Grad: 3 bis 50, Alkylrest: C8 bis C36), sowie Alkali- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxylierter Alkylphenole (EO-Grad: 3 bis 50, Alkylrest: C4 bis C9), von Alkylsulfonsäuren (Alkylrest: C12 bis C18) und von Alkylarylsulfonsäuren (Alkylrest: C9 bis C 18). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Die Emulgatoren und/oder Schutzkolloide können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind.

Des weiteren können auch Gemische aus Emulgatoren und/oder Schutzkolloiden verwendet werden.

Des weiteren kann die Monomerzusammensetzung einen oder mehrere Initiatoren enthalten, die zur Emulsionspolymerisation eingesetzt werden. Diese Initiatoren werden im Zusammenhang mit der Initiatorzusammensetzung beschrieben.

Vorzugsweise weist die Monomerzusammensetzung unter anderem
9 bis 90, vorzugsweise 30 bis 80 Gew.-% Monomere,
9 bis 90, vorzugsweise 15 bis 30 Gew.-%, Wasser,
0 bis 5, vorzugsweise 1 bis 3 Gew.-% Emulgatoren und/oder Schutzkolloide
0 bis 10, vorzugsweise 0,5 bis 3 Gew.-% Initiatoren auf.

Die Temperatur der Monomerzusammensetzung bei Eintritt in den Mikromischer kann in weiten Bereichen liegen, wobei die Temperatur vorzugsweise so gewählt wird, dass vor Eintritt in den Mikromischer keine oder nur eine untergeordnete Polymerisation stattfindet.

Falls die Monomerzusammensetzung einen oder mehrere Initiatoren umfasst, wird die Temperatur vorzugsweise so gewählt, dass die Halbwertszeit des Initiators mindestens 1 Stunde, insbesondere mindestens 5 Stunden und besonders bevorzugt mindestens 10 Stunden beträgt.

Gemäß einer besonderen Ausführungsform liegt die Temperatur der Monomerzusammensetzung mindestens 20°C unterhalb der Temperatur der Initiatorzusammensetzung, jeweils bei Eintritt in den Mikromischer gemessen.

Gemäß einem besonderen Aspekt der vorliegenden Erfindung liegt die Temperatur der Monomerzusammensetzung bei Eintritt in den Mikromischer im Bereich von 10 bis 80°C, vorzugsweise im Bereich von 20 bis 60°C, ohne dass hierdurch eine Beschränkung erfolgen soll.

Beim erfindungsgemäßen Verfahren wird eine Initiatorzusammensetzung über eine Zuführung in den Mikromischer geleitet. Die Initiatorzusammensetzung umfasst mindestens eine Verbindung, auch Initiator genannt, die in der Lage ist, Radikale zu bilden.

Zur Polymerisation werden übliche Initiatoren eingesetzt. Im Fall der radikalischen Polymerisation in wässriger Emulsion sind diese Initiatoren im allgemeinen gut in Wasser löslich, wobei auch öllösliche Initiatoren in Gebrauch sind. Zu den gebräuchlichen Initiatoren gehören unter anderem anorganische Peroxide, wie Wasserstoffperoxid oder Alkalimetallperoxodisulfate; organische Peroxide, insbesondere organische Acylperoxide wie Dibenzoylperoxid, Dilauroylperoxid, Didecanoylperoxid und Di-iso-nonanoylperoxid, Alkylperester, wie t-Butylperpivalat, t-Butyl-per-2-ethylhexanoat, t-Butylpermaleinat, t-Butylperacetat und t-Butylperbenzoat, sowie Hydroperoxide, wie t-Butylhydroperoxid; Azoverbindungen, wie 2,2'-Azobisisobutyronitril, 2,2'-Azobis-(methylisobutyrat), 2,2'-Azobis(2,4-dimethylvaleronitril), 2,2'-Azobis(4-methoxy-2,4dimethylvaleronitril), 2,2'-Azobis(N, N'-dimethylenisobutyramidin)dihydrochlorid, 2,2'-Azobis(2-amidinopropan)-dihydrochlorid oder 4,4'-Azobis(4-cyanvaleriansäure).

Weiterhin kommen organische kombinierte Systeme, die aus wenigstens einem organischen Reduktionsmittel und wenigstens einem Peroxid und/oder Hydroperoxid zusammengesetzt sind, z.B. t-Butylhydroperoxid und das Na-Salz der Hydroxymethansulfinsäure, sowie kombinierte Systeme die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Natriumperoxodisulfat in Betracht, wobei an Stelle von Ascorbinsäure auch häufig das Na-Salz der Hydroxymethansulfinsäure, Natriumsulfit, Natriumhydrogensulfit oder Natriummetabisulfit eingesetzt werden.

Die zuvor dargelegten Initiatoren können einzeln oder als Mischung eingesetzt werden.

Die Initiatorkonzentration der Initiatorzusammensetzung liegt vorzugsweise im Bereich von 0,01 bis 5 Gew.-%, insbesondere 0,1 bis 3 Gew.-% und besonders bevorzugt 0,18 bis 0,5 Gew.-%.

Des weiteren kann die Initiatorzusammensetzung weitere Bestandteile, insbesondere Wasser, Emulgatoren und/oder Schutzkolloide umfassen.

Gemäß einem besonderen Aspekt der vorliegenden Erfindung werden wasserlösliche Initiatoren in Form wässriger Lösungen eingesetzt.

Bevorzugte Initiatorzusammensetzungen weisen unter anderem
5 bis 99,9, vorzugsweise 70 bis 99 Gew.-% Wasser,
0,1 bis 95, vorzugsweise 1 bis 20 Gew.-% Initiator,
0 bis 80, vorzugsweise 3 bis 40 Gew.-% Emulgatoren und/oder Schutzkolloide auf.

Die Initiatorzusammensetzung wird vor Eintritt in den Mikromischer auf eine Temperatur vorgewärmt, bei der Radikale gebildet werden. Diese Temperatur ist von der Zerfallscharakteristik des Initiators bzw. der Initiatoren abhängig.

Vorzugsweise wird die Temperatur der Initiatorzusammensetzung bei Eintritt in den Mikromischer so gewählt, dass die Halbwertszeit des Initiators mindestens 1 Minute, insbesondere mindestens 5 Minuten und höchstens 10 Stunden, insbesondere höchstens 5 Stunden und besonders bevorzugt höchstens 1 Stunde beträgt.

Im allgemeinen liegt diese Temperatur im Bereich von 40°C bis 160°C, vorzugsweise 60°C bis 100°C, ohne dass hierdurch eine Beschränkung erfolgen soll.

Das Volumenverhältnis von Initiatorzusammensetzung und Monomerzusammensetzung kann in weiten Bereichen schwanken. So kann dieses Verhältnis beispielsweise über den Wassergehalt der beiden Zusammensetzungen gesteuert werden. Vorzugsweise liegt dieses Verhältnis im Bereich von 1:1 bis 1:50, insbesondere 1:2 bis 1:10.

Erfindungsgemäß polymerisiert man mindestens ein Teil der Monomeren nach Austritt der Mischung aus dem Mikromischer. Dieser Teil kann in Abhängigkeit des verwendeten Mikromischers in weiten Bereichen liegen. Vorzugsweise polymerisiert man mindestens 60%, vorzugsweise mindestens 80% der zugeführten Monomere nach dem Austritt der gebildeten Mischung aus dem Mikroreaktor. Dieser Teil kann über die Temperatur sowie die Fliessgeschwindigkeit eingestellt werden. Bestimmt werden kann dieser Anteil über eine Analyse der Mischung, wobei der Anteil der gebildeten Polymere in Verhältnis zum Anteil der Monomere gesetzt wird.

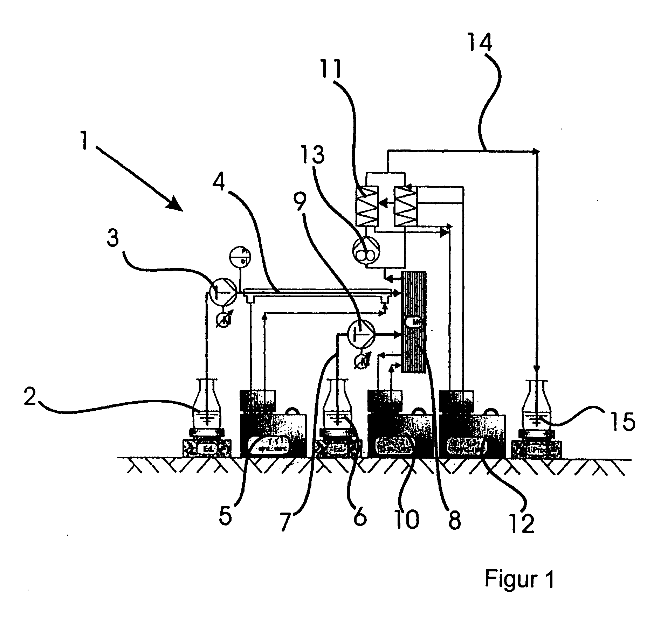

In Figur 1 ist eine Vorrichtung zur Durchführung des erfindungsgemäßen Verfahrens beispielhaft dargestellt. Die Vorrichtung umfasst unter anderem zwei Vorlagebehälter 1 und 5, die über mindestens zwei Zuleitungen 3 und 7, mit einem Mikromischer verbunden sind, wobei mindestens eine der Zuleitungen 3 beheizbar ausgestattet ist, und einen Loopreaktor umfasst.

Fig. 1 zeigt das Fließschema einer Vorrichtung 1 bzw. einer Anlage zur Herstellung von Emulsionspolymeren. Ausgangsstoffe sind eine Monomerzusammensetzung, die in Vorlagebehälter 6 bevorratet ist, und eine Initiatorzusammensetzung, die in Vorlagebehältern 2 enthalten ist. Die Vorlagebehälter 2 und 6 können einen Rührer enthalten. Des weiteren kann die Vorrichtung 1 mit Mitteln versehen werden, um eine Emulsion zu bilden, die dann in Vorlagebehälter 6 überführt wird.

Der Vorlagebehälter 2 ist über eine beheizbar ausgestattete Zuleitung 4 mit dem Mikromischer 8 verbunden, der ebenso wie der Vorlagebehälter 6 in nichtgezeigter Weise beispielsweise mit Stickstoff beaufschlagt werden kann. Unter anderem kann eine Pumpe 3 dazu dienen, die Initiatormischung in den Mikromischer 8 zu überführen. Darüber hinaus kann in die Zuleitung 4 ein üblicher Filter eingebaut sein. Zum Beheizen der Zuleitung kann beispielsweise ein Thermostat 5 dienen.

Die Monomerzusammensetzung strömt von dem Vorlagebehälter 6 über eine Zuleitung 7, in der ein Filter eingebaut sein kann, der eventuelle Verunreinigungen aus dem Gemisch heraus filtriert, in einen Mikromischer 8. Die Zuleitung 7 kann mit Mitteln zum Heizen oder Kühlen ausgestattet sein. Die Zuführung der Monomerzusammensetzung von dem Vorlagebehälter 6 über die Zuleitung 7 in den Mikromischer 8 kann über eine Pumpe 9 erfolgen, die unter anderem auch elektronisch geregelt sein kann.

Bei dem Mikromischer 8 handelt es sich um auf dem Markt erhältliche Mikromischer unterschiedlicher Ausführungsformen. Der Mikromischer kann über Mittel zum Heizen erwärmt werden. Dies kann beispielsweise über einen Thermostat 10 erfolgen, wobei für das Heizmedium zum Beheizen ein geschlossener Kreislauf vorgesehen sein kann.

Die Monomerzusammensetzung und die Initiatorzusammensetzung werden in einem definierten Mischungsverhältnis von beispielsweise 1 : 1 bis 10 : 1, in den Mikromischer 8 eingespeist. Diese beiden Reaktionspartner, auch als Edukte bezeichnet, werden durch den Mikromischer hindurchgeführt und in einem Misch- und Reaktionsraum des Mikromischers zusammengeführt. Durch die vorgeschaltete temperierte Zuleitung 4 wird die Initiatorzusammensetzung soweit erwärmt, dass beim Eintritt in den Mikromischer 8 sofort Radikale gebildet werden. Im allgemeinen kann es sich hierbei um die Reaktionstemperatur handeln, die üblich im Bereich von 60°C bis 180°C liegt. Die Reaktionstemperatur hängt von den jeweiligen Reaktionspartnern ab und ist nicht auf den voranstehenden Bereich beschränkt.

Die Polymerisation der beiden Reaktionspartner erfolgt weiterhin im nachgeschalteten Loopreaktor 11. Die Einstellung der Molmassen und des Umsatzes bei einer vorgegebenen Monomerzusammensetzung kann über den jeweiligen Initiator bzw. dessen Konzentration sowie über die Temperierung der Rohrreaktorstrecke und der Verweilzeit der Reaktionspartner im Loopreaktor 11 erfolgen. Der Loopreaktor 11 ist üblich beheizbar ausgestattet. Die Erwärmung des Loopreaktors 11 auf die Polymerisationstemperatur kann beispielsweise über einen Thermostat 12 erfolgen. Im Loopreaktor 11 kann die Reaktionsmischung mittels einer Pumpe 13 im Kreis geführt werden.

Der Loopreaktor 11 ist über eine Austragsleitung 14 mit einem Austragsbehälter 15 für die Polymerisatdispersion verbunden. In der Austragsleitung 14 kann ein nicht dargestelltes Regelventil angeordnet sein, mittels dem der Betriebsdruck in dem Loopreaktor 11 steuerbar ist. Der Zu- und Abfluss in bzw. aus dem Loopreaktor kann elektronisch geregelt sein. Der Austragsbehälter 15 kann als Rührbehälter ausgestattet sein.

Loopreaktoren sind dem Fachmann bekannt. Es sind Reaktoren, in denen die Reationsmischung kreisförmig geführt werden, wobei dem Reaktor nur soviel Eduktlösung zugefügt wird, wie Produktlösung entnommen wird. Eine Beschreibung ist beispielsweise in K. Geddes, The Loop process in Chemistry and Industry, 21.3.1983, S. 223ff dargelegt.

Die Vorrichtung, insbesondere der Loopreaktor kann unter anderem aus Metall, insbesondere Edelstahl, Glas, Keramik, Silizium oder Kunststoff gefertigt werden.

Die in dem vorliegenden Verfahren zur Emulsionspolymerisation zu verwendenden Mikromischer sind an sich in der Fachwelt bekannt. Die verwendete Bezeichnung Mikromischer steht dabei stellvertretend für Mikro- und Minimischer, die sich nur aufgrund der Dimensionen und Aufbau der Kanalstrukturen unterscheiden. Derartige Vorrichtungen werden auch zur Durchführung von Reaktionen verwendet, wobei diese Vorrichtungen daher auch als Mikro- bzw. Minireaktoren bezeichnet werden.

In Mikromischern werden die mindestens zwei zu vermischenden Eduktströme über sehr feine lamellenartige Kanäle derart zusammengeführt, dass bereits beim Aufeinandertreffen der Ströme eine Vermischung der Edukte im Mikro-Bereich vorliegt. Konstruktionsbedingt sind in einem derartigen Mikromischer extrem kleine Kanäle vorhanden, die zu einem extrem hohen Oberflächen-Volumen-Verhältnis führen.

Aus der DD 246 257 A1 ist bekannt, dass miniaturisierte verfahrenstechnische Apparaturen für chemische Reaktionen eingesetzt werden können, bei denen die zu behandelnden Stoffe nur in geringen Mengen zur Verfügung stehen oder diese Stoffe sehr teuer sind, so dass man sich große Totvolumina in den verfahrenstechnischen Apparaturen nicht leisten kann. In der DE 3 926 466 C2 werden chemische Reaktionen von zwei chemischen Stoffen mit starker Wärmetönung in einem Mikroreaktor beschrieben. Mikroreaktoren zur Durchführung chemischer Reaktionen sind aus Stapeln von strukturierten Platten aufgebaut und in der DE 39 26 466 C2 und US 5,534,328 beschrieben. In der US 5,811,062 wird darauf hingewiesen, dass Mikrokanalreaktoren vorzugsweise für Reaktionen benutzt werden, die keine Materialien oder Feststoffe benötigen oder produzieren, die die Mikrokanäle verstopfen können. In DE 198 16 886 werden Vorrichtungen zur Lösungspolymerisation beschrieben, die Mikromischer umfassen. Allerdings wird die Reaktionsführung so gesteuert, dass keine hochmolekularen Anteile entstehen.

Beispielsweise können Mikromischer, wie sie aus den angeführten Schriften oder aus Veröffentlichungen des Instituts für Mikrotechnik Mainz GmbH, Deutschland, bekannt sind, oder auch kommerziell erhältliche Mikromischer, wie beispielsweise der auf CytosTm basierende SelectJm der Firma Cellular Process Chemistry GmbH, Frankfurt/Main, eingesetzt werden.

Die verwendete Bezeichnung Mikromischer steht dabei stellvertretend für Mikro- und Minimischer, die sich nur aufgrund der Dimensionen und Aufbau der Reaktionskanalstrukturen unterscheiden.

Ein Mikromischer kann unter anderem aus mehreren aufeinandergestapelten und miteinander verbundenen Plättchen aufgebaut sein, auf deren Oberflächen sich mikromechanisch erzeugte Strukturen befinden, die in ihrem Zusammenwirken Misch- und Reaktionsräume bilden. Es ist wenigstens ein durch das System hindurchführender Kanal enthalten, der mit dem Einlass und dem Auslass verbunden ist.

Die Flussraten der Materialströme sind apparativ limitiert, beispielsweise durch die sich je nach geometrischer Auslegung des Mikromischers einstellenden Drücke. Diese Werte sind stark vom eingesetzten Mikromischertyp abhängig und können durch einfache Versuche festgestellt werden, wobei diese Werte bei kommerziellen Produkten den Spezifikationen entnommen werden können.

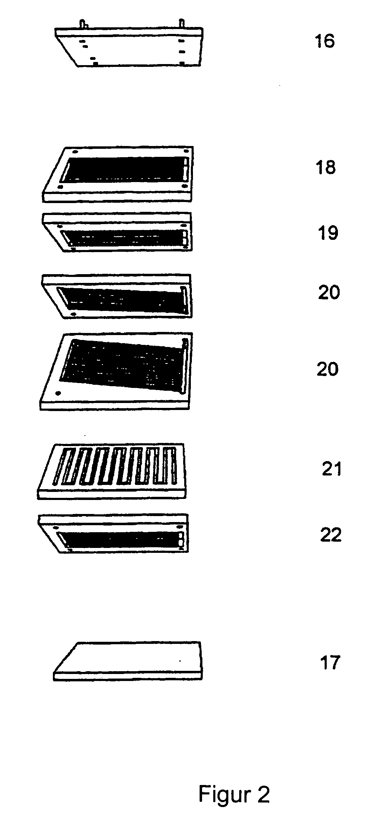

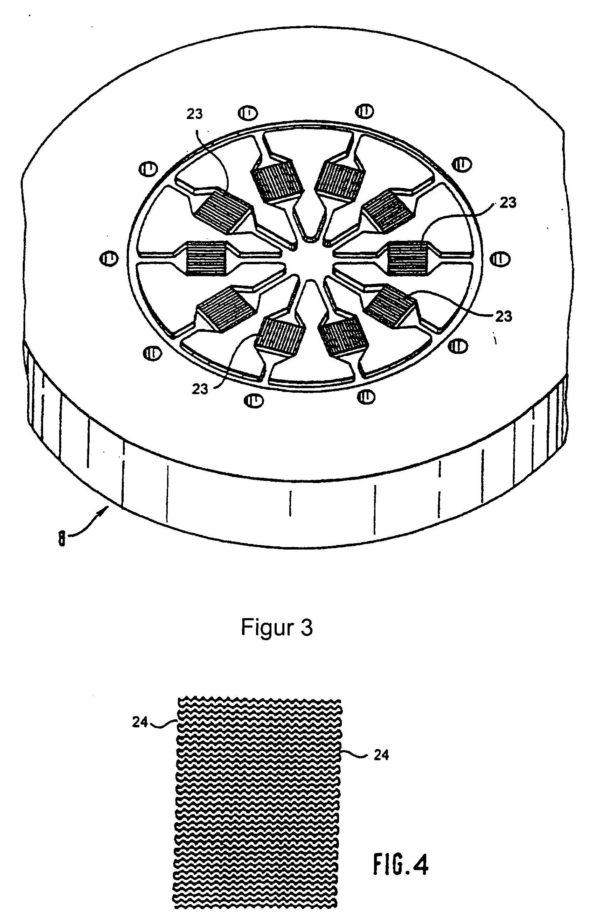

Beispielhaft werden in den Figuren 2 und 3 ein für die Emulsionspolymerisation einsetzbarer Mikroreaktor 8 beschrieben.

In Figur 2 ist ein Mikromischersystem dargestellt, das beispielsweise ein aus sechs, aufeinander gestapelten und miteinander verbundenen mikrostrukturierten Blechlagen und je einer Deckelplatte (16) und Bodenplatte (17) aufgebautes verfahrenstechnisches Modul ist, das durch den Zusammenbau unter Druck gehalten oder fest verbunden wird, um Abdichtflächen zwischen den Platten zusammenzupressen.

Das in Figur 2 beschriebene Mikromischersystem beinhaltet zwei Wärmetauscher für Kühl- und/oder Heizmedium, eine Mischzone für die Vermischung der Reaktanden sowie eine kurze Verweilstrecke.

Mit Hilfe des Wärmetauschers (18) können die in Platte (19) getrennt einströmenden Eduktströme vortemperiert werden. In den Platten (20), die ein gemeinsames Volumen bilden, findet dann die Vermischung der Eduktströme statt. In der Verweilzone (21) kann das Gemisch mit Hilfe des Wärmetauschers (22) auf eine gewünschte Temperatur gebracht werden.

Das Mikroreaktionssystem kann kontinuierlich betrieben werden, wobei sich die jeweils miteinander zur Vermischung gebrachten Fluidmengen im Mikro- (µl) bis Milliliter (ml) -Bereich bewegen.

Vorteilhaft für die Emulsionspolymerisation in diesem Mikromischersystem sind geometrische Gestaltungen, die keine Totwasserzonen umfassen, wie z.B. Sackgassen oder scharfe Ecken, in denen Polymere, die im Mikromischer gebildet werden, sedimentieren können. Bevorzugt sind daher kontinuierliche Bahnen mit runden Ecken. Die Strukturen müssen klein genug sein, um die immanenten Vorteile der Mikromischertechnik auszunutzen, nämlich hervorragende Wärmekontrolle, laminare Strömung, diffusives Mischen und geringes internes Volumen.

Die lichte Weite der lösungs- oder suspensionsführenden Kanäle beträgt zweckmäßigerweise 5 bis 10000 µm, vorzugsweise 5 bis 2000 µm, besonders bevorzugt 10 bis 800 µm, insbesondere 20 bis 700 µm. Die lichte Weite der Wärmetauscherkanäle richtet sich in erster Linie nach der lichten Weite der flüssigkeits- oder suspensionsführenden Kanäle und ist zweckmäßigerweise kleiner oder gleich 10000 µm, vorzugsweise kleiner oder gleich 2000 µm, insbesondere kleiner oder gleich 800 µm. Die Untergrenze der lichten Weite der Wärmetauscherkanäle ist unkritisch und wird allenfalls durch den Druckanstieg der zu pumpenden Wärmetauscherflüssigkeit und von der Notwendigkeit der optimalen Wärmezufuhr oder -abfuhr begrenzt.

Die Dimensionen eines für das vorliegende Verfahren einsetzbaren Mikromischersystems sind:
Wärmetauscherstrukturen:
   Kanalbreite kleiner oder gleich 600 µm,
   Kanalhöhe kleiner oder gleich 250 µm,
Mischer:
   Kanalbreite kleiner oder gleich 600 µm,
   Kanalhöhe kleiner oder gleich 500 µm.

Die sechs aufeinanderliegenden und dicht miteinander verbundenen Blechlagen werden vorzugsweise von oben mit allen Wärmetauscherfluiden und Reaktanden beschickt. Die Abfuhr des Produktes und der Wärmertauscherfluide erfolgt vorzugsweise ebenfalls nach oben. Die eventuelle Zufuhr dritter und vierter an der Reaktion beteiligter Flüssigkeiten wird über eine direkt vor dem Reaktor befindliche T-Verzweigung realisiert. Die Kontrolle der benötigten Konzentrationen und Flüsse wird vorzugsweise über Präzisionskolbenpumpen und eine computergesteuerte Regelung vorgenommen. Die Temperatur wird über integrierte Sensoren überwacht und mit Hilfe der Regelung und eines Thermostaten/Cryostaten überwacht und gesteuert.

Die Herstellung von Mischungen von Einsatzstoffen zu Materialströmen kann auch vorher in Mikromischern oder in vorgeschalteten Vermischungszonen stattfinden. Es können auch Einsatzstoffe in nachgeschalteten Vermischungszonen oder in nachgeschalteten Mikromischern oder -reaktoren zudosiert werden.

In Figur 3 ist eine weitere Ausführungsform eines geeigneten Mikromischers beschrieben.

In Fig. 3 ist eine perspektivische Draufsicht auf einen Mikromischer 8 gezeigt, bei dem es sich um einen an sich bekannten statischen Mikromischer handelt. Der Mikromischer 8 umfasst eine Mikromischeranordnung mit einer Anzahl von Mischeinheiten 23, die sternförmig angeordnet sind. Eine Draufsicht auf eine Mischeinheit des Mikromischers ist in Fig. 4 dargestellt. Die Anzahl von Kanälen 24 pro Mischeinheit beträgt 2 x 16 bis 2 x 18. In dem Mikromischer 8 werden die miteinander zu vermischenden Reaktionspartner bzw. Edukte über die lamellenartigen Kanäle 24 in einer Weise zusammengeführt, dass beim Auftreten der Reaktionsströme eine Vermischung der Edukte im Mikrobereich geschieht.

Die Materialien aus denen die Mikromischer gefertigt sind, sind in der Fachwelt bekannt. Je nach Emulsionssystem können die Reaktoren beispielsweise aus Metall, insbesondere Edelstahl, Glas, Keramik, Silizium oder Kunststoffe gefertigt sein.

Nachfolgend wird die Erfindung anhand von Beispielen näher erläutert, ohne dass hierdurch eine Beschränkung erfolgen soll.

### Beispiel 1

In einer in Figur 1 dargestellten Vorrichtung wurde eine Dispersionspolymerisation durchgeführt, wobei die in Vorratsbehälter 2 enthaltene Initiatorlösung mit der Pumpe 3 mit 1,0 ml/min. gefördert und über die mittels eines Thermostates 5 auf eine Temperatur von 120°C beheizte Zuleitung 4 in den Mikroreaktor 8 geleitet wurde. Die in Vorratsbehälter 6 vorgehaltene Monomeremulsion wurde mit der Pumpe 9 mit 2,4 ml/min in den Mikroreakor 8 gepumpt, der mit dem Thermostat 10 auf 93°C temperiert wird. Der Mikroreakor 8 mündet in den Loopreakor 11 der mittels dem Thermostat 12 auf einer Temperatur von 93°C gehalten wird. Mittels der Pumpe 13 wird das Reaktionsgemisch mit 1,7 ml/min. im Kreis gefördert. Es wird nur soviel Produkt in den Produktbehälter 15 gefördert, wie durch die Pumpen 3 und 9 ersetzt wird.

Die Bestandteile der verwendeten Zusammensetzungen sind in den nachfolgenden Tabellen aufgeführt.

| Initiatorlösung | |
|---|---|
| Rezeptbestandteile | Gewichtsteile |
| Deionisiertes Wasser | 25,3 |
| ®Marlon A | 0,6 |
| Borax | 0,1 |
| Kaliumpersulfat | 0,3 |

| Monomeremulsion | |
|---|---|
| Rezeptbestandteile | Gewichtsteile |
| Deionisiertes Wasser | 58,9 |
| ®Marlon A | 0,4 |
| ®Akropal N230 | 2,0 |
| Borax | 0,49 |
| Kaliumpersulfat | 0,4 |
| Vinylacetat | 80,0 |
| Versatic-10-säurevinylester | 20,0 |
| Acrylsäure | 1,0 |

Der Emulgator ®Marlon A (Benzolsulfonsäure, C 10-C 13 Alkylderivate, Natriumsalz) ist von Hüls AG kommerziell erhältlich. Der Emulgator ®Akropal N230 (Nonylphenolethoxylat-Derivat) ist von Clariant AG kommerziell erhältlich.

Die erhaltene Polymerdispersion wurde auf Restmonomere untersucht, wobei der Restmonomergehalt an Vinylacetat 0,09 Gew.-% und der an Versatic-10säurevinylester 0,03 Gew.-% betrug.

Darüber hinaus wurde die Teilchengrößenverteilung mit Photon Correlation Spectroscopy (PCS) bestimmt, wobei die Methode allgemein bekannt ist (vgl. R. Pecora, Editor, Dynamic Light Scattering: Application of Photon Correlation Spectroscopy (Plenum Press, N.Y. 1985).

Die Teilchengrößenverteilung sowie der Feststoffgehalt sind in Tabelle 1 dargelegt.

### Beispiel 2

Das Beispiel 1 wurde im wesentlichen wiederholt, wobei jedoch die folgenden Zusammensetzungen verwendet wurden.

| Initiatorlösung | |
|---|---|
| Rezeptbestandteile | Gewichtsteile |
| Deionisiertes Wasser | 53,4 |
| ®Emulsogen EPA 073 (28%) | 0,3 |
| Pre-emulsion (ohne APS) | 3,6 |
| Ammoniumpersulfat | 0,1 |

| Monomeremulsion | |
|---|---|
| Rezeptbestandteile: | Gewichtsteile |
| Deionisiertes Wasser | 32,4 |
| ®Emulsogen EPA 073 (28%) | 1,0 |
| Methacrylsäure | 2,0 |
| Methylmethacrylat | 20,0 |
| Butylacrylat | 80,0 |
| Ammoniumpersulfat | 0,3 |

Der Emulgator ®Emulsogen EPA 073 (Alkylethersulfat-Derivat, Natriumsalz) ist von Clariant AG kommerziell erhältlich.

Das Produkt wird mittels Ammoniak (12,5 %) auf einen pH Wert von 8,5 eingestellt.

Die erhaltene Polymerdispersion wurde auf Restmonomere untersucht, wobei der Restmonomergehalt an Methylmethacrylat 0,02 Gew.-% und an Butylacrylat 0,11 Gew.-% betrug.

Die Teilchengrößenverteilung sowie der Feststoffgehalt sind in Tabelle 1 dargelegt.

### Vergleichsbeispiel 1

Das Beispiel 1 wurde im wesentlichen wiederholt, wobei jedoch die Initiatorlösung bei Raumtemperatur in den Mikroreaktor eingespeist wurde.

Der Restmonomergehalt an Vinylacetat betrug 18 Gew.-% und der an Versatic-10-säurevinylester 34 Gew.-%. Die Teilchengrößenverteilung sowie der Feststoffgehalt sind in Tabelle 1 dargelegt.

**Tabelle 1**

| Beispiel | Feststoff [%] | Teilchengrößenverteilung gemäß PCS | |
|---|---|---|---|
| | | dw [nm] | dw/dn |
| Beispiel 1 | 51,9 | 190 | 1,3 |
| Beispiel 2 | 46,0 | 117 | 1,23 |
| Vergleichsbeispiel 1 | 5,4 | 789 | |

## Patentansprüche

1. Verfahren zur Herstellung von Emulsionspolymerisaten, wobei mindestens eine Monomerzusammensetzung in einen Reaktor gegeben und in einem Zweiphasensystem polymerisiert wird, **dadurch gekennzeichnet, dass** man mindestens eine Monomerzusammensetzung und mindestens eine Initiatorzusammensetzung über unterschiedliche Zuführungen in einen Mikromischer führt und mischt, wobei man die Initiatorzusammensetzung vor dem Eintritt in den Mikromischer auf eine Temperatur vorwärmt, bei der mindestens einer der Initiatoren Radikale bildet, und man nach dem Austritt der in dem Mikromischer gebildeten Mischung mindestens einen Teil der Monomeren polymerisiert.

2. Verfahren nach Anspruch 1, **dadurch gekennzeichnet, dass** die Monomerzusammensetzung einen Initiator umfasst.

3. Verfahren nach Anspruch 2, **dadurch gekennzeichnet, dass** die Temperatur der Monomerzusammensetzung bei Eintritt in den Mikromischer unterhalb der Zerfallstemperatur des in der Monomerzusammensetzung befindlichen Initiators gehalten wird.

4. Verfahren nach Anspruch 3, **dadurch gekennzeichnet, dass** die Temperatur der Monomerzusammensetzung bei Eintritt in den Mikromischer im Bereich von 10 bis 80°C liegt.

5. Verfahren nach einem oder mehreren der vorhergehenden Ansprüche, **dadurch gekennzeichnet, dass** die Temperatur der Initiatorzusammensetzung bei Eintritt in den Mikromischer im Bereich von 40 bis 160°C liegt.

6. Verfahren nach einem oder mehreren der vorhergehenden Ansprüchen, **dadurch gekennzeichnet, dass** die Temperatur der Monomerzusammensetzung mindestens 20°C unterhalb der Temperatur der Initiatorzusammensetzung liegt, jeweils bei Eintritt in den Mikromischer gemessen.

7. Verfahren nach einem oder mehreren der vorhergehenden Ansprüche, **dadurch gekennzeichnet, dass** die Monomerzusammensetzung und die Initiatorzusammensetzung Wasser umfassen.

8. Verfahren nach einem oder mehreren der vorhergehenden Ansprüche, **dadurch gekennzeichnet, dass** die Monomerzusammensetzung und die Initiatorzusammensetzung mindestens einen Emulgator umfassen.

9. Verfahren nach einem oder mehreren der vorhergehenden Ansprüche, **dadurch gekennzeichnet, dass** das Volumenverhältnis von Initiatorzusammensetzung und Monomerzusammensetzung im Bereich von 1:1 bis 1:50 liegt.

10. Verfahren nach einem oder mehreren der vorhergehenden Ansprüche, **dadurch gekennzeichnet, dass** die Initiatorkonzentration der Initiatorzusammensetzung im Bereich von 0,01 bis 5 Gew.-% liegt.

11. Verfahren nach einem oder mehreren der vorhergehenden Ansprüche, **dadurch gekennzeichnet, dass** die Initiatorzusammensetzung eine Lösung darstellt.

12. Verfahren nach einem oder mehreren der vorhergehenden Ansprüche, **dadurch gekennzeichnet, dass** die Monomerzusammensetzung eine Emulsion darstellt.

13. Verfahren nach einem oder mehreren der vorhergehenden Ansprüche, **dadurch gekennzeichnet, dass** man mindestens 80% der zugeführten Monomere nach dem Austritt der gebildeten Mischung aus dem Mikroreaktor polymerisiert.

14. Verfahren nach einem oder mehreren der vorhergehenden Ansprüche, **dadurch gekennzeichnet, dass** man die Polymerisation nach dem Austritt aus dem Mikromischer in einem Loopreaktor durchführt.

15. Vorrichtung zur Durchführung des Verfahrens nach einem der Ansprüche 1 bis 14, aufweisend mindestens zwei Vorlagebehälter, die über mindestens zwei Zuleitungen, mit einem Mikromischer verbunden sind, wobei mindestens eine der Zuleitungen beheizbar ausgestattet ist, **dadurch gekennzeichnet, dass** die Vorrichtung einen Loopreaktor umfasst.

16. Vorrichtung nach Anspruch 15, **dadurch gekennzeichnet, dass** zwischen den Vorlagebehälter und dem Mikromischer Pumpen vorgesehen sind.

17. Vorrichtung nach Anspruch 15 oder 16, **dadurch gekennzeichnet, dass** mindestens eine der Zuleitungen einen Wärmetauscher aufweist.

18. Vorrichtung nach einem der Ansprüche 15 bis 17, **dadurch gekennzeichnet, dass** mindestens einer der Vorlagebehälter Mittel zur Herstellung einer Emulsion aufweist.

19. Vorrichtung nach einem der Ansprüche 15 bis 18, **dadurch gekennzeichnet, dass** der Mikromischer Mittel zum Heizen aufweist.
